# EUROPÄISCHE PATENTSCHRIFT

(11) **EP 0 361 198 B1**
(45) Veröffentlichungstag und Bekanntmachung des Hinweises auf die Patenterteilung: **28.12.1994**
(21) Anmeldenummer: 89116808.0
(22) Anmeldetag: 11.09.1989
(51) Int. Cl.: H01J 9/20, H01J 61/35

(54) **Verfahren zur Herstellung einer Reflexionsbeschichtung bei Hochdruckentladungslampen**
Method of producing a reflection layer for high-pressure discharge lamps
Méthode de fabrication d'une couche réfléchissante pour lampes à décharge à haute pression

(30) Priorität: 26.09.1988 DE 3832643
(43) Veröffentlichungstag der Anmeldung: 04.04.1990
(73) Patentinhaber: Patent-Treuhand-Gesellschaft für elektrische Glühlampen mbH, 81543 München (DE)
(72) Erfinder: Barthelmes, Clemens, D-1000 Berlin (DE); Hohlfeld, Andreas, Dr., D-1000 Berlin (DE); Vollmer, Lothar, D-1000 Berlin (DE)

(56) Entgegenhaltungen:
- US-A- 3 851 200
- US-A- 4 012 655
- PATENT ABSTRACTS OF JAPAN, Bd. 6, Nr. 80 (M-129),19.Mai 1982;& JP-A-57 17368

## Beschreibung

Die Erfindung betrifft ein Verfahren zur Herstellung einer Reflexionsbeschichtung auf den Enden des Entladungsgefäßes einer Hochdruckentladungslampe.

Die Entladungsgefäße von Hochdruckentladungslampen, insbesondere solche mit Metallhalogenid-Füllung, besitzen an den Enden eine Reflexionsbeschichtung. Diese Beschichtung regelt den Wärmehaushalt und bestimmt so die Konstanz der Farbtemperatur und die mittlere Lebensdauer der Lampe.

Als Paste für die Reflexionsbeschichtung werden bisher Suspensionen verwendet, die als Binder Kieselsol und/oder Glaspulver enthalten. Zur Einstellung einer entsprechenden Viskosität und zur Verhinderung der Sedimentation werden dem Binder organische Zusätze, wie z.B. Celluloseäther, in größeren Mengen beigemischt. Diese organischen Zusätze müssen bei der Brennerfertigung vollständig beseitigt werden, da sie dem Reflexionsbelag ein graues Aussehen verleihen und so keine optimale Wärmereflexion, wie sie durch einen weißen Belag erreicht wird, ermöglichen. Die Beseitigung der organischen Zusätze erfordert jedoch ein langes Ausheizen des Belages sowie zusätzlich einen "Weißbrennvorgang" von einigen Minuten, bei dem die Bindemittel unter Luft- oder Sauerstoffzufuhr oxidiert werden.

Aus US-A-4 012 655 ist bekannt, eine Reflexions beschichtung auf Basis von Zirkonoxid aufzubringen, die zur Haftverbesserung kolloides Aluminiumoxid und Boroxidpulver enthält.

Ziel der Erfindung ist es, ein einfaches Verfahren zur Herstellung eines weißen Reflexionsbelages auf den Enden des Entladungsgefäßes zu entwickeln, bei dem auf ein zeitaufwendiges Ausheizen bzw. Oxidieren des Belages verzichtet werden kann.

Das Ziel wird durch ein Verfahren mit den Merkmalen des Anspruches 1 erreicht. Dabei wird eine Zusammensetzung der Reflektorsuspension verwendet, wie sie im ersten Anspruch aufgeführt ist. Weitere vorteilhafte Merkmale des Verfahrens sind den Unteransprüchen zu entnehmen.

Die Suspension aus 0,5 bis 5 Gew.-% eines hochdispersen pyrogenen Kieselsäure-Aluminiumoxid-Gemisches, 0 bis 5 Gew.-% Essigsäure, 0 bis 1 Gew.-% Borsäure, 24 bis 55 Gew.-% Wasser und aufgefüllt auf 100 Gew.-% Zirkonoxid gestattet eine wesentlich rationellere Fertigung des Reflexionsbelages. Da diese Zusammensetzung keine organischen Zusatzstoffe enthält, kann auf längere Ausheiz- bzw. Oxidationsverfahrensschritte verzichtet werden. Außerdem ergibt sich durch die Verwendung des hochdispersen pyrogenen Kieselsäure-Aluminiumoxid-Gemisches mit bis 30 Gew.-% Aluminiumoxid-Anteil als Binder eine Viskosität, die ein Aufsprühen der Paste besonders begünstigt. Die Suspension ist unempfindlich gegen Frost und erfährt auch bei längeren Lagerzeiten von einigen Monaten keine Qualitätsverschlechterung.

Optimale Bedingungen bezüglich Spritzverhalten und Anhaftung auf dem Brenner ergeben sich bei einer Suspensionszusammensetzung aus 1,5 Gew.-% des Kieselsäure-Aluminiumoxid-Gemisches, 1,4 Gew.-% Essigsäure, 0,2 Gew.-% Borsäure, 59,4 Gew.-% Zirkonoxid und 37,5 Gew.-% Wasser, wobei der Aluminiumoxid-Anteil an dem Kieselsäure-Aluminiumoxid-Gemisch 16 Gew.-% beträgt.

Zur Erzielung einer gleichmäßigen Schichtdicke des Reflexionsbelages auf den Enden des Entladungsgefäßes wird der Brenner zuerst auf ca. 250 °C erhitzt. Anschließend wird die Suspension mit einer Spritzpistole aufgesprüht und der Belag durch sukzessives Hochheizen bis auf ca. 1000 °C bis zur Wischfestigkeit angesintert.

Bei Vergleichen zeigte sich, daß für die Herstellung eines Reflexionsbelages unter Verwendung der Suspensionszusammensetzung an einer Rundläufermaschine eine Taktzeit von 5,5 s pro Stellung erforderlich ist. Demgegenüber wurde bei der bisher verwendeten Suspension aus Kieselsol, Ammoniak, Celluloseäthern, Zirkonoxid und Wasser eine Taktzeit von 11 s benötigt. Außerdem mußte die bisherige Beschichtung "weißgebrannt" werden, wofür ein zusätzlicher Verfahrensschritt (an einer anderen Maschine) von ca. 120 s benötigt wurde. Insgesamt dauert die Herstellung eines zweiseitigen Reflektorbelages bei Verwendung der neuen Suspension ca. 80 s, während mit der alten Paste dafür ca. 300 s benötigt wurden.

Bei Verwendung einer Suspension mit den oben genannten Gewichtsbereichen für die anteiligen Substanzen ergibt sich eine Reflexionsschicht an den Enden des Entladungsgefäßes, die aus 0,8 bis 10 Gew.-% eines Kieselsäure-Aluminiumoxid-Gemisches, 0 bis 1,3 Gew.-% Boroxid und ergänzt auf 100 Gew.-% Zirkonoxid besteht. Mit der optimalen Suspensions-Zusammensetzung, wie sie oben aufgeführt ist, erhält man eine Reflexionsschicht, die sich aus 2,5 Gew.-% des Kieselsäure-Aluminiumoxid-Gemisches, 0,2 Gew.-% Boroxid und 97,3 Gew.-% Zirkonoxid zusammensetzt.

## Patentansprüche

1. Verfahren zur Herstellung einer Reflexionsbeschichtung auf den Enden des Entladungsgefäßes einer Hochdruckentladungslampe, bei welchem zur Herstellung der Beschichtung eine Suspension aus 0,5 bis 5 Gew.-% eines hochdispersen pyrogenen Kieselsäure-Aluminiumoxid-Gemisches, 0 bis 5 Gew.-% Essigsäure, 0 bis 1 Gew.-% Borsäure, 24 bis 55 Gew.-% Wasser und aufgefüllt auf 100 Gew.-% Zirkonoxid verwendet wird.

2. Verfahren nach Anspruch 1, dadurch gekennzeichnet, daß der Aluminiumoxid-Anteil an dem Kieselsäure-Aluminiumoxid-Gemisch bis 30 Gew.-% beträgt.

3. Verfahren nach Anspruch 1, dadurch gekennzeichnet, daß eine Suspension aus 1,5 Gew.-% des Kieselsäure-Aluminiumoxid-Gemisches, 1,4 Gew.-% Essigsäure, 0,2 Gew.-% Borsäure, 59,4 Gew.-% Zirkonoxid und 37,5 Gew.-% Wasser verwendet wird.

4. Verfahren nach Anspruch 3, dadurch gekennzeichnet, daß der Aluminiumoxid-Anteil an dem Kieselsäure-Aluminiumoxid-Gemisch 16 Gew.-% beträgt.

5. Verfahren nach Anspruch 1, dadurch gekennzeichnet, daß das Entladungsgefäß vor dem Aufbringen der Beschichtung auf ca. 250 °C erwärmt wird.

6. Verfahren nach Anspruch 1, dadurch gekennzeichnet, daß die Suspension auf die Enden des Entladungsgefäßes aufgesprüht wird.

7. Verfahren nach Anspruch 6, dadurch gekennzeichnet, daß das Entladungsgefäß nach dem Aufsprühen der Suspension sukzessiv auf ca. 1000 °C hochgeheizt wird.

## Claims

1. Method of producing a reflection coating on the ends of the discharge vessel of a high-pressure discharge lamp, in which method a suspension composed of 0.5 to 5 % by weight of a highly disperse pyrogenic silica/aluminium oxide mixture, 0 to 5 % by weight of acetic acid, 0 to 1 % by weight of boric acid, 24 to 55 % by weight of water made up to 100 % by weight with zirconium oxide is used to produce the coating.

2. Method according to Claim 1, characterized in that the proportion of aluminium oxide in the silica/aluminium oxide mixture is up to 30 % by weight.

3. Method according to Claim 1, characterized in that a suspension composed of 1.5 % by weight of the silica/aluminium oxide mixture, 1.4 % by weight of acetic acid, 0.2 % by weight of boric acid, 59.4 % by weight of zirconium oxide and 37.5 % by weight of water is used.

4. Method according to Claim 3, characterized in that the proportion of aluminium oxide in the silica/aluminium oxide mixture is 16 % by weight.

5. Method according to Claim 1, characterized in that the discharge vessel is heated to approximately 250°C before the application of the coating.

6. Method according to Claim 1, characterized in that the suspension is sprayed onto the ends of the discharge vessel.

7. Method according to Claim 6, characterized in that the discharge vessel is gradually heated to approximately 1,000°C after the suspension has been sprayed on.

## Revendications

1. Procédé de fabrication d'un revêtement réfléchissant sur les extrémités de l'enceinte de décharge d'une lampe à décharge à haute pression, dans lequel on utilise pour la fabrication du revêtement une suspension consistant en 0,5 à 5 % en poids d'un mélange d'acide silicique et d'oxyde d'aluminium, pyrogéne et très dispersé, 0 à 5 % en poids d'acide acétique, 0 à 1 % en poids d'acide borique, 24 à 55 % en poids d'eau, et complétée à 100 % en poids par de l'oxyde de zirconium.

2. Procédé selon la revendication 1, caractérisé en ce que la proportion d'oxyde d'aluminium du mélange d'acide silicique et d'oxyde d'aluminium peut représenter jusqu'à 30 % en poids.

3. Procédé selon la revendication 1, caractérisé en ce qu'il est utilisé une suspension, consistant en 1,5 % en poids du mélange d'acide silicique et d'oxyde d'aluminium, 1,4 % en poids d'acide acétique, 0,2 % en poids d'acide borique, 59,4 % en poids d'oxyde de zirconium et 37,5 % en poids d'eau.

4. Procédé selon la revendication 3, caractérisé en ce que la proportion d'oxyde d'aluminium du mélange d'acide silicique et d'oxyde d'aluminium est de 16 % en poids.

5. Procédé selon la revendication 1, caractérisé en ce que l'enceinte de décharge est portée à environ 250° C avant le dépôt du revêtement.

6. Procédé selon la revendication 1, caractérisé en ce que la suspension est appliquée par projection sur les extrémités de l'enceinte de décharge.

7. Procédé selon la revendication 6, caractérisé en ce que l'enceinte de décharge est, après l'application de la suspension, portée par chauffage successif jusqu'à environ 1.000° C.
